# EUROPEAN PATENT APPLICATION

(11) **EP 4 661 481 A1**
(43) Date of publication of application: **10.12.2025**
(21) Application number: 24755824.0
(22) Date of filing: 04.01.2024
(51) Int. Cl.: H04W 28/02

(54) **METHOD FOR REPORTING BUFFER STATE, AND COMMUNICATION APPARATUS**

(30) Priority: 15.02.2023 CN 202310162556
(71) Applicant: Huawei Technologies Co., Ltd., Shenzhen, Guangdong 518129 (CN)
(72) Inventor: QIANG, Li, Shenzhen, Guangdong 518129 (CN); LIU, Nannan, Shenzhen, Guangdong 518129 (CN); KOZIOL, Dawid, Shenzhen, Guangdong 518129 (CN); LI, Bingzhao, Shenzhen, Guangdong 518129 (CN)
(74) Representative: Goddar, Heinz J.
(86) International application number: PCT/CN2024/070491
(87) International publication number: WO 2024/169448

(57) **Abstract**

This application provides a buffer status reporting method and a communication apparatus. The method includes: buffering a plurality of data packets, where the plurality of data packets include a first data packet and a second data packet; and sending a first buffer status report and a second buffer status report to a network device, where the first buffer status report indicates a buffer status of the first data packet, and the second buffer status report indicates a buffer status of the second data packet. The first data packet and the second data packet differ in at least one of the following attributes: a service type, time to expiration, an importance degree of a protocol data unit set to which the data packet belongs, and a type of the protocol data unit set to which the data packet belongs. In this way, the first buffer status report and the second buffer status report are respectively generated for the data packets with different attributes, so that when allocating transmission resources to the first data packet and the second data packet based on the two buffer status reports, the network device can consider the different attributes of the first data packet and the second data packet. This can improve performance of buffer status reporting.

## Description

This application claims priority to Chinese Patent Application No. 202310162556.X, filed with the China National Intellectual Property Administration on February 15, 2023 and entitled "BUFFER STATUS REPORTING METHOD AND COMMUNICATION APPARATUS", which is incorporated herein by reference in its entirety.

### TECHNICAL FIELD

This application relates to the field of communication technologies, and more specifically, to a buffer status reporting method and a communication apparatus.

### BACKGROUND

In a communication system, a transmission resource used by a terminal device to send a data packet may be allocated by a network device. For example, the terminal device may send a buffer status report (buffer status report, BSR) to the network device, to notify the network device of a buffer status of the data packet by using the BSR, so that the network device can allocate the transmission resource to the terminal device based on the BSR.

As the terminal device supports increasingly diverse services, different data packets have different characteristics based on different service requirements. For example, different data packets may have different importance degrees, life cycles, and the like. Due to these characteristics, different data packets have different requirements on transmission resources.

However, currently, the terminal device does not fully consider the characteristics when reporting the BSR.

### SUMMARY

This application provides a buffer status reporting method and a communication apparatus, to improve performance of buffer status reporting.

According to a first aspect, a buffer status reporting method is provided. The method may be implemented by a terminal device or a chip in the terminal device. The method includes: buffering a plurality of data packets, where the plurality of data packets include a first data packet and a second data packet; and sending a first buffer status report and a second buffer status report to a network device, where the first buffer status report indicates a buffer status of the first data packet, and the second buffer status report indicates a buffer status of the second data packet. The first data packet and the second data packet differ in at least one of the following attributes: a service type, time to expiration, an importance degree of a protocol data unit set to which the data packet belongs, or a type of the protocol data unit set to which the data packet belongs.

Based on this technical solution, the data packets buffered by the terminal device include data packets with different attributes, and the terminal device may respectively generate the first buffer status report and the second buffer status report for the data packets with the different attributes, so that when allocating transmission resources to the first data packet and the second data packet based on the two buffer status reports, the network device can consider the different attributes of the first data packet and the second data packet. This can improve performance of buffer status reporting.

With reference to the first aspect, in some implementations of the first aspect, sending the first buffer status report and the second buffer status report to the network device includes: sending a protocol data unit to the network device, where the protocol data unit includes the first buffer status report and the second buffer status report.

Based on this technical solution, one protocol data unit may include two buffer status reports, and the two buffer status reports may respectively indicate buffer statuses of two data packets that differ in at least one attribute.

With reference to the first aspect, in some implementations of the first aspect, the first buffer status report includes first data amount information and time information, the first data amount information indicates a data amount of the first data packet, and the time information indicates time within which sending of the first data packet needs to be completed. The second buffer status report includes second data amount information, and the second data amount information indicates a data amount of the second data packet.

Based on this technical solution, the terminal device may report the data amount of the first data packet and the time within which sending of the first data packet needs to be completed, report the data amount of the second data packet, and not need to report time within which sending of the second data packet needs to be completed. In this way, the network device may determine, based on the first buffer status report including the time information and the second buffer status report including no time information, that the first data packet and the second data packet differ in an attribute related to the time within which sending of the first data packet or the second data packet needs to be completed. In other words, in this technical solution, not both of the two buffer status reports need to include the time information, and the time information may be included in only one buffer status report. This can reduce transmission resources occupied by the buffer status report.

In addition, the network device may allocate a transmission resource to the first data packet based on the time information. For example, sending of the first data packet needs to be completed within a first time range, and sending of the second data packet may not need to be completed within the first time range. The network device can allocate, to the first data packet based on the time information, the transmission resource that can be used for completing sending of the first data packet within the first time range. In this way, reliability of allocating the transmission resource by the network device is improved.

With reference to the first aspect, in some implementations of the first aspect, the first buffer status report includes indication information, and the indication information indicates that the first buffer status report indicates the buffer status of the first data packet.

Based on this technical solution, the terminal device and the network device may pre-agree on an attribute difference between the first data packet and the second data packet, so that the first buffer status report may not need to include attribute information of the first data packet, and the network device may learn, by using the indication information in the first buffer status report, that the first buffer status report is a buffer status report of the first data packet. This can reduce transmission resources occupied by the buffer status report.

With reference to the first aspect, in some implementations of the first aspect, the first buffer status report includes a sub-header field, and the indication information is a logical channel identifier field or an extended logical channel identifier field of the sub-header field.

With reference to the first aspect, in some implementations of the first aspect, sending of the second buffer status report is not completed or the second buffer status report is in a truncated buffer status report format, and a periodic buffer status report timer is not restarted.

Based on this technical solution, the terminal device may not need to restart the periodic buffer status report timer each time sending of a buffer status report is completed. After sending of the first buffer status report is completed, the terminal device may not restart the periodic buffer status report timer, and may restart the periodic buffer status report timer after sending of the second buffer status report is completed. This avoids frequently restarting the periodic buffer status report timer by the terminal device due to frequent sending of the first buffer status, reduces a possibility that the second buffer status report cannot be sent for a long time period, and can improve reliability of buffer status report reporting.

With reference to the first aspect, in some implementations of the first aspect, sending of the first data packet needs to be completed within a first time range.

Based on this technical solution, the first data packet may be a data packet whose sending needs to be completed within the first time range. For example, the time to expiration of the first data packet is within the first time range, so that the network device can allocate, to the first data packet based on the first buffer status report, a transmission resource that can be used for completing sending of the first data packet within the first time range, to improve reliability of data packet transmission.

With reference to the first aspect, in some implementations of the first aspect, the method further includes: receiving configuration information from the network device, where the configuration information indicates the first time range.

With reference to the first aspect, in some implementations of the first aspect, a format of the first buffer status report is determined based on at least one of the following information: a quantity of logical channels from which the first data packet comes, a quantity of logical channel groups from which the first data packet comes, a quantity of protocol data unit sets from which the first data packet comes, a type of the first buffer status report, or a quantity of bits occupied by the first buffer status report.

With reference to the first aspect, in some implementations of the first aspect, the second buffer status report is a padding buffer status report, and a format of the second buffer status report is determined based on the quantity of bits occupied by the first buffer status report.

Optionally, sending the first buffer status report and the second buffer status report to the network device includes: sending the first buffer status report to the network device; and sending the second buffer status report to the network device after sending the first buffer status report to the network device.

Optionally, the protocol data unit includes the first buffer status report and the second buffer status report, and a bitstream corresponding to the first buffer status report is encapsulated before a bitstream corresponding to the second buffer status report.

According to a second aspect, a buffer status reporting method is provided. The method may be implemented by a terminal device or a chip in the terminal device. The method includes: buffering at least one data packet; sending a buffer status report to a network device, where the buffer status report indicates a buffer status of the at least one data packet, the buffer status report includes indication information and/or time information, the indication information indicates whether the at least one data packet includes a first data packet, the time information indicates time within which sending of the at least one data packet needs to be completed, and the first data packet is related to at least one of the following information: service type information, time to expiration information, importance degree information of a protocol data unit set to which the first data packet belongs, or type information of the protocol data unit set to which the first data packet belongs.

Based on this technical solution, the terminal device may include the indication information and/or the time information in the buffer status report, indicate, by using the indication information, whether the at least one data packet includes a data packet with an attribute of the first data packet, and/or indicate, by using the time information, an attribute that is of the at least one data packet and that is related to the time within which sending of the at least one data packet needs to be completed, so that the network device can allocate a transmission resource based on the attribute of the at least one data packet, to improve performance of buffer status report reporting.

With reference to the second aspect, in some implementations of the second aspect, before the buffer status report is sent to the network device, the method further includes: determining that the at least one data packet includes the first data packet, where the buffer status report includes the time information, or the time information and the indication information, or the indication information.

Based on this technical solution, the terminal device may include the indication information and/or the time information in the buffer status report when determining that the at least one data packet includes the first data packet, or may not include the indication information and/or the time information in the buffer status report when determining that the at least one data packet does not include the first data packet, so that transmission resources occupied by the buffer status report can be reduced.

With reference to the second aspect, in some implementations of the second aspect, sending of the first data packet needs to be completed within a first time range.

Based on this technical solution, the first data packet may be a data packet whose sending needs to be completed within the first time range. For example, time to expiration of the first data packet is within the first time range, so that the network device can allocate, to the first data packet based on a first buffer status report, a transmission resource that can be used for completing sending of the first data packet within the first time range, to improve reliability of data packet transmission.

With reference to the second aspect, in some implementations of the second aspect, the method further includes: receiving configuration information from the network device, where the configuration information indicates the first time range.

With reference to the second aspect, in some implementations of the second aspect, the buffer status report includes a sub-header field, and the sub-header field includes the indication information.

With reference to the second aspect, in some implementations of the second aspect, the indication information is a logical channel identifier field or an extended logical channel identifier field of the sub-header field.

With reference to the second aspect, in some implementations of the second aspect, the at least one data packet does not include the first data packet, sending of the buffer status report is not completed or the buffer status report is in a truncated buffer status report format, and a periodic buffer status report timer is not restarted.

According to a third aspect, a buffer status reporting method is provided. The method may be implemented by a network device or a chip in the network device. The method includes: receiving a first buffer status report and a second buffer status report from a terminal device, where the first buffer status report indicates a buffer status of a first data packet, and the second buffer status report indicates a buffer status of a second data packet; and determining a transmission resource of the first data packet and a transmission resource of the second data packet based on the first buffer status report and the second buffer status report. The first data packet and the second data packet differ in at least one of the following attributes: a service type, time to expiration, an importance degree of a protocol data unit set to which the data packet belongs, or a type of the protocol data unit set to which the data packet belongs.

For descriptions of beneficial effects of the third aspect, refer to related descriptions of the first aspect. Details are not described herein again.

With reference to the third aspect, in some implementations of the third aspect, receiving the first buffer status report and the second buffer status report from the terminal device includes: receiving a protocol data unit from the terminal device, where the protocol data unit includes the first buffer status report and the second buffer status report.

With reference to the third aspect, in some implementations of the third aspect, the first buffer status report includes first data amount information and time information, the first data amount information indicates a data amount of the first data packet, and the time information indicates time within which sending of the first data packet needs to be completed. The second buffer status report includes second data amount information, and the second data amount information indicates a data amount of the second data packet.

With reference to the third aspect, in some implementations of the third aspect, the first buffer status report includes indication information, and the indication information indicates that the first buffer status report indicates the buffer status of the first data packet.

With reference to the third aspect, in some implementations of the third aspect, the first buffer status report includes a sub-header field, and the indication information is a logical channel identifier field or an extended logical channel identifier field of the sub-header field.

With reference to the third aspect, in some implementations of the third aspect, sending of the first data packet needs to be completed within a first time range.

With reference to the third aspect, in some implementations of the third aspect, the method further includes: sending configuration information to the terminal device, where the configuration information indicates the first time range.

According to a fourth aspect, a buffer status reporting method is provided. The method may be implemented by a network device or a chip in the network device. The method includes: receiving a buffer status report from a terminal device, where the buffer status report indicates a buffer status of at least one data packet, the buffer status report includes indication information and/or time information, the indication information indicates whether the at least one data packet includes a first data packet, the time information indicates time within which sending of the at least one data packet needs to be completed, and the first data packet is related to at least one of the following information: service type information, time to expiration information, importance degree information of a protocol data unit set to which the first data packet belongs, or type information of the protocol data unit set to which the first data packet belongs. The network device determines a transmission resource of the at least one data packet based on the buffer status report.

For descriptions of beneficial effects of the fourth aspect, refer to related descriptions of the first aspect. Details are not described herein again.

With reference to the fourth aspect, in some implementations of the fourth aspect, sending of the first data packet needs to be completed within a first time range.

With reference to the fourth aspect, in some implementations of the fourth aspect, the method further includes: sending configuration information to the terminal device, where the configuration information indicates the first time range.

With reference to the fourth aspect, in some implementations of the fourth aspect, the buffer status report includes a sub-header field, and the sub-header field includes the indication information.

With reference to the fourth aspect, in some implementations of the fourth aspect, the indication information is a logical channel identifier field or an extended logical channel identifier field of the sub-header field.

According to a fifth aspect, a communication apparatus is provided. The communication apparatus has a function of implementing the method in any one of the first aspect or the possible implementations of the first aspect. The function may be implemented by hardware, or may be implemented by hardware executing corresponding software. The hardware or the software includes one or more modules corresponding to the foregoing function.

According to a sixth aspect, a communication apparatus is provided. The communication apparatus has a function of implementing the method in any one of the second aspect or the possible implementations of the second aspect. The function may be implemented by hardware, or may be implemented by hardware executing corresponding software. The hardware or the software includes one or more modules corresponding to the foregoing function.

According to a seventh aspect, a communication apparatus is provided. The communication apparatus has a function of implementing the method in any one of the third aspect or the possible implementations of the third aspect. The function may be implemented by hardware, or may be implemented by hardware executing corresponding software. The hardware or the software includes one or more modules corresponding to the foregoing function.

According to an eighth aspect, a communication apparatus is provided. The communication apparatus has a function of implementing the method in any one of the fourth aspect or the possible implementations of the fourth aspect. The function may be implemented by hardware, or may be implemented by hardware executing corresponding software. The hardware or the software includes one or more modules corresponding to the foregoing function.

According to a ninth aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive and send a signal, to enable the communication apparatus to perform the method in any one of the first aspect, the second aspect, or the possible implementations of these aspects.

For example, the communication apparatus is a terminal device or a chip used in the terminal device.

According to a tenth aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive and send a signal, to enable the communication apparatus to perform the method in any one of the third aspect, the fourth aspect, or the possible implementations of these aspects.

For example, the communication apparatus is a network device or a chip used in the network device.

According to an eleventh aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method in any one of the first aspect, the second aspect, or the possible implementations of these aspects is performed.

The communication apparatus may be a terminal device or a chip used in the terminal device.

According to a twelfth aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method in any one of the third aspect, the fourth aspect, or the possible implementations of these aspects is performed.

The communication apparatus may be a network device or a chip used in the network device.

According to a thirteenth aspect, a computer-readable storage medium is provided. The computer-readable storage medium stores computer instructions, and when the computer instructions are run on a computer, the method in any one of the first aspect to the fourth aspect or the possible implementations of these aspects is performed.

According to a fourteenth aspect, a computer program product is provided. The computer program product includes computer program code, and when the computer program code is run on a computer, the method in any one of the first aspect to the fourth aspect or the possible implementations of these aspects is performed.

According to a fifteenth aspect, a communication system is provided, and includes the communication apparatus according to any one or more of the fifth aspect to the fourteenth aspect, or the communication apparatus according to any one of the possible implementations of any one of these aspects.

### BRIEF DESCRIPTION OF DRAWINGS

FIG. 1 is a diagram of a communication system 100 applicable to an embodiment of this application;
FIG. 2 is a diagram of a structure of a BSR;
FIG. 3 is a schematic flowchart of a buffer status reporting method according to an embodiment of this application;
FIG. 4 is a diagram of a structure of another BSR according to an embodiment of this application;
FIG. 5 is a schematic flowchart of another buffer status reporting method according to an embodiment of this application; and
FIG. 6 to FIG. 8 are diagrams of structures of possible apparatuses according to embodiments of this application.

### DESCRIPTION OF EMBODIMENTS

The following describes technical solutions in this application with reference to the accompanying drawings.

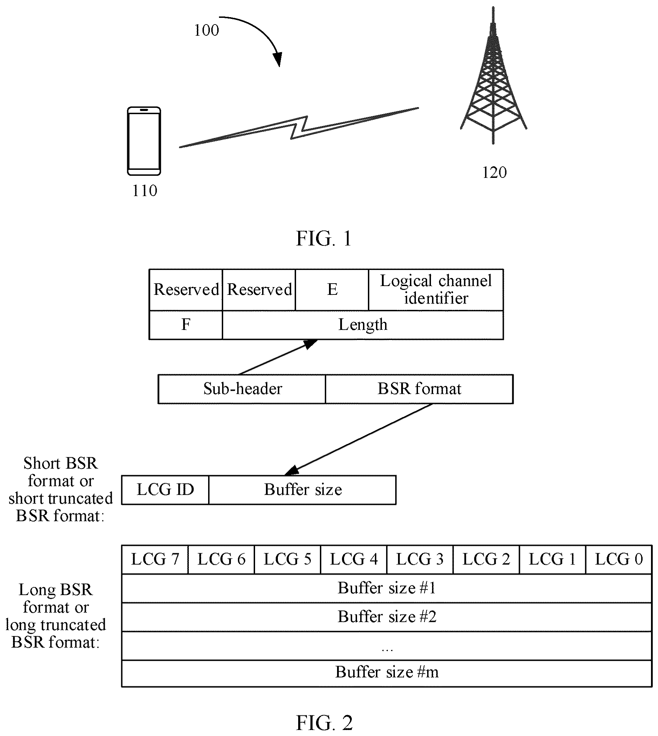

FIG. 1 is a diagram of a communication system 100 applicable to an embodiment of this application.

As shown in FIG. 1, the communication system 100 may include one network device 120, and may further include at least one terminal device 110. A connection may be established between the terminal device 110 and the network device 120 for communication.

The terminal device in embodiments of this application may also be referred to as user equipment, an access terminal, a subscriber unit, a subscriber station, a mobile station, a remote station, a remote terminal, a mobile device, a user terminal, a wireless communication device, a user agent, or a user apparatus. A terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, for example, glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and devices that are dedicated to only one type of application function and that need to work with other devices such as smartphones, for example, various smart bands or smart jewelry for monitoring physical signs.

In addition, the terminal device may alternatively be a terminal device in an internet of things (internet of things, IoT) system. An IoT is an important component in future development of information technologies. A main technical feature of the IoT is to connect things to a network by using a communication technology, to implement an intelligent network for human-machine interconnection and thing-thing interconnection. A specific form of the terminal device is not limited in this application.

It should be understood that, in embodiments of this application, the terminal device may be an apparatus configured to implement a function of the terminal device, or may be an apparatus, for example, a chip system, that can support the terminal device in implementing the function. The apparatus may be mounted in a terminal. In this embodiment of this application, the chip system may include a chip, or may include a chip and another discrete component.

The network device in embodiments of this application may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, may be a gNB or a transmission point (TRP or TP) in a 5G system like an NR system, or one antenna panel or a group of antenna panels (including a plurality of antenna panels) of a base station in a 5G system, or may be a network node, for example, a baseband unit (BBU) or a distributed unit (distributed unit, DU), that forms a gNB or a transmission point.

In some deployments, the gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling like RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be understood that, in embodiments of this application, the network device may be an apparatus configured to implement a function of the network device, or may be an apparatus, for example, a chip system, that can support the network device in implementing the function. The apparatus may be mounted in the network device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or other communication systems.

It should be understood that this application may be applied to a standalone 5G or LTE system, a future mobile communication system, or the like. This application may alternatively be applied to a non-standalone 5G or LTE system, a future mobile communication system, or the like, for example, a DC scenario including an evolved universal terrestrial radio access-new radio dual connectivity (evolved universal terrestrial radio access-NR dual connectivity, EN-DC) scenario and the like, and a carrier aggregation (carrier aggregation, CA) scenario. A data unit in this application may be a protocol data unit (protocol data unit, PDU), a service data unit SDU (service data unit, SDUA), or another data unit. This is not particularly limited in this application. The following uses the PDU as an example for description.

To facilitate understanding of the technical solutions in the embodiments of this application, before the solutions in embodiments of this application are described based on a 5G architecture in this application, a buffer status report (buffer status report, BSR) is first described with reference to FIG. 2. Before sending a data packet to the network device, the terminal device may first send a BSR to the network device, so that the network device learns of a data amount of the buffered data packet to be sent by the terminal device. In this way, the network device may allocate an uplink grant (uplink grant), to be specific, a transmission resource used by the terminal device to send the data packet, to the terminal device based on the data amount indicated by the BSR.

FIG. 2 is a diagram of a structure of a BSR. The BSR includes two parts: a BSR media access control (media access control, MAC) control element (control element, CE) sub-header (sub-header), and a BSR MAC CE. Refer to FIG. 2. The BSR MAC CE sub-header may include two reserved (reserved) fields, an extension (extension, E) field, a logical channel identifier (logical channel identifier, LCID) field, or an enhanced LCID (enhanced LCID, eLCID) field. The extension field indicates whether the BSR MAC CE sub-header is the last BSR MAC CE sub-header. The LCID/eLCID field is used to identify a type of the BSR MAC CE. Optionally, the BSR MAC CE sub-header may further include a format (format, F) field and a length field. The format field indicates a length of the length field. For example, when the format field is 0, it indicates that the length field includes seven bits; or when the format field is 1, it indicates that the length field includes 15 bits. The BSR MAC CE may be in different BSR formats. For example, one terminal device may have a plurality of logical channels (logical channels, LCHs), and the plurality of LCHs may be divided into a plurality of groups. For example, one terminal device may have 16 LCHs, the 16 LCHs may be divided into four groups, and each group includes four LCHs. If the terminal device reports a data packet on one logical channel group (logical channel group, LCG), the terminal device may use a BSR MAC CE in a short BSR format (short BSR format) or a short truncated BSR format (short truncated BSR format). Refer to FIG. 2. The BSR MAC CE in the short BSR format or the short truncated BSR format may include an LCG ID field and a buffer size (buffer size) field. The LCG ID field indicates an identifier of the LCG, and the buffer size field indicates a data amount of the buffered data packet on the LCG. If the terminal device reports a data amount on each of a plurality of LCGs by using one BSR, the terminal device may use a BSR MAC CE in a long BSR format (long BSR format) or a long truncated BSR format (long truncated BSR format). As shown in FIG. 2, a 1^{st} byte of the BSR MAC CE in the long BSR format or the long truncated BSR format may include identifier fields (an LCG 0 to an LCG 7) of eight LCGs. In the LCG 0 to the LCG 7, if m LCGs include buffered data packets, the BSR MAC CE includes m buffer size fields (a buffer size #1 to a buffer size #m), respectively indicating amounts of data buffered on the m LCGs, where m is an integer less than or equal to 8 and greater than or equal to 2.

It should be noted that formats of the BSR MAC CE defined in a current protocol may further include an extended short BSR format (extended short BSR format), an extended long BSR format (extended long BSR format), an extended short truncated BSR format (extended short truncated BSR format), and an extended long truncated BSR format (extended long truncated BSR format). For more detailed descriptions, refer to a stipulation in the existing protocol. In this embodiment of this application, four BSR format shown in FIG. 2 are applicable to the foregoing four extended BSR formats.

It should be noted that the short BSR format or the long BSR format is distinguished from the short truncated BSR format or the long truncated BSR format based on a BSR type. There may be the following three BSR types: a regular BSR (regular BSR), a periodic BSR (periodic BSR), and a padding BSR (padding BSR). For example, if a logical channel receives a new data packet, and a priority of the logical channel is higher than a priority of another logical channel that is in a same logical channel group as the logical channel and that includes data, the terminal device may trigger a BSR of the regular BSR type. If the terminal device sends a BSR based on a predefined periodicity, the terminal device may trigger a BSR of the periodic BSR type. For example, the terminal device may configure a periodic BSR timer (periodicBSR-Timer), restart the periodic BSR timer each time sending of a BSR is completed, and send the BSR of the periodic BSR type when the periodic BSR timer expires. If the terminal device sends a BSR by using a remaining bit in a PDU, the terminal device may trigger a BSR of the padding type.

If the terminal device triggers the BSR of the regular BSR type or the BSR of the periodic BSR type, the format of the BSR MAC CE is the short BSR format or the long BSR format. If the terminal device triggers the BSR of the padding BSR type, the format of the BSR MAC CE is the short truncated BSR format or the long truncated BSR format.

As the terminal device supports increasingly diverse services, different data packets have different characteristics based on different service requirements. For example, different data packets may have different importance degrees, life cycles, and the like. For example, some services, for example, extended reality (extended reality, XR) services such as augmented reality (augmented reality, AR), virtual reality (virtual reality, VR), and mixed reality (mixed reality, MR), have a high requirement on time for sending a data packet by the terminal device. The terminal device needs to send data to a network device within specific time. If the terminal device does not send the data to the network device within the time, the data is invalid. The time may be referred to as a life cycle or a delay budget (delay budget) of the data. For another example, a video frame at an application layer of the XR service may include a basic frame (or an I frame or an I slice) and an enhanced frame (or a P frame or a P slice), and the basic frame and the enhanced frame have different importance degrees. For example, when editing a video about a starry sky, the terminal device may encode complete picture information of the starry sky into a first frame. In a subsequent frame, the terminal device does not repeatedly encode and transmit picture information that is the same as that in the previous frame, but only encodes and transmits different parts. This type of frame that can be decoded only by using another frame is an enhanced frame. It can be learned that the importance degree of the basic frame is higher than the importance degree of the enhanced frame.

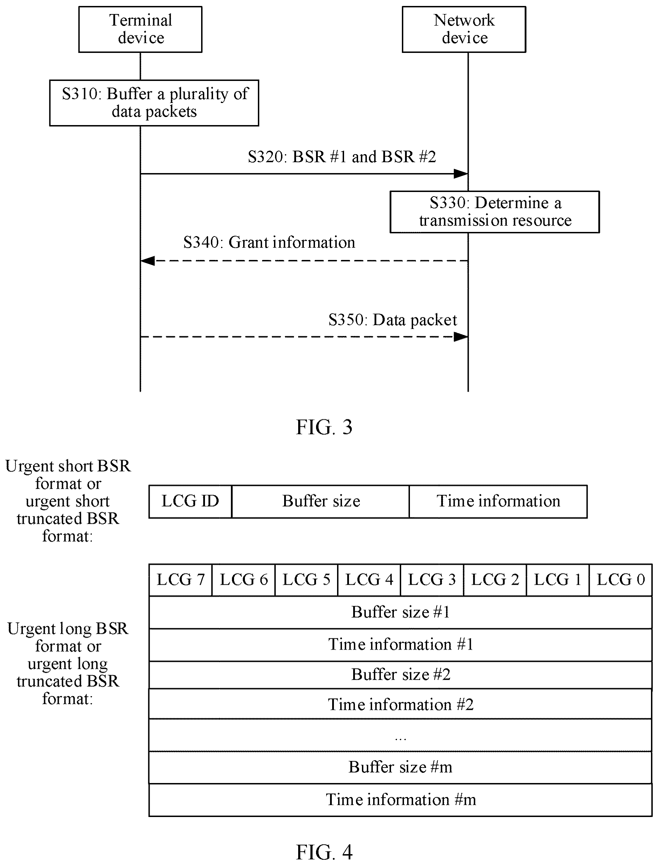

This application provides a buffer status reporting method and a communication apparatus. The following first describes the buffer status reporting method with reference to FIG. 3.

FIG. 3 is a schematic flowchart of a buffer status reporting method according to an embodiment of this application.

S310: A terminal device buffers a plurality of data packets.

The plurality of data packets include a first data packet and/or a second data packet, and the first data packet and the second data packet differ in at least one of the following attributes: a service type, time to expiration, an importance degree of a protocol data unit set to which the data packet belongs, or a type of the protocol data unit set to which the data packet belongs. The terminal device may respectively generate a first buffer status report and a second buffer status report for the data packets with different attributes, so that when allocating transmission resources to the first data packet and the second data packet based on the two buffer status reports, a network device can consider the different attributes of the first data packet and the second data packet.

For example, the first data packet may include data of an XR service type, and the second data packet may include legacy data (legacy data) of a non-XR service type. For another example, the first data packet may include urgent data (urgent data) in data of an XR service type, and the second data packet may include non-urgent (non-urgent) data in XR data and legacy data (legacy data) of a non-XR service type.

For example, whether sending of a data packet needs to be completed within a first time range may be related to at least one of the foregoing attributes. The foregoing attributes may be determined respectively based on the following information: service type information, time to expiration information, importance degree information of a PDU set to which the data packet belongs, or type information of the PDU set to which the data packet belongs. In other words, the first data packet in the plurality of data packets is related to at least one of the foregoing information. The service type information may indicate a service type of the data packet, for example, an XR service. The time to expiration information may indicate time within which sending of data needs to be completed, or time to expiration, for example, a PDU set delay budget (PDU set delay budget, PSDB) of a PDU set or a frame to which the data belongs, or remaining duration obtained by subtracting duration for which the data has been buffered in a transmitter side device from the PSDB. The importance degree information of the PDU set to which the data packet belongs indicates an importance degree, an importance level, or a priority of the data packet. The type information of the PDU set to which the data packet belongs may indicate a data type, for example, a basic frame or an enhanced frame in data of the XR service.

The terminal device may determine the first data packet and the second data packet in the data packets based on one or more of the foregoing information in a plurality of manners. For example, the terminal device may determine the first data packet in the data packets based on the service type information. For example, it is configured in such a manner that sending of data of some specific service types needs to be completed within the first time range. For example, a data packet of the XR service type is the first data packet, and a data packet of another service type is the second data packet. For another example, the terminal device may determine the first data packet in the data packets based on the time to expiration information. For example, the terminal device may determine whether time to expiration of each data packet is within the first time range. A data packet whose time to expiration is within the first time range is the first data packet, and a data packet whose time to expiration is not within the first time range is the second data packet. For still another example, the terminal device may determine the first data packet in the data packets based on the time to expiration information and the importance degree information of the PDU set to which the data packet belongs. For example, a data packet whose time to expiration is within the first time range and that is a basic frame is the first data packet, and a remaining data packet is the second data packet. For example, a data packet is an enhanced frame whose importance degree is not high. Even if time to expiration of the data packet is within the first time range, the terminal device does not consider the data packet as a data packet whose sending needs to be completed within the first time range. In other words, in addition to the first time range and time to expiration of a data packet, the terminal device may further determine whether the data packet is the first data packet based on a service type of the data packet (for example, whether the data packet is an XR service), an importance degree of a PDU set to which the data packet belongs (for example, whether the PDU set is an important PDU set), a priority of the PDU set to which the data packet belongs (for example, whether the PDU set is a high-priority PDU set), a type of the PDU set to which the data packet belongs (for example, whether the PDU set is an I frame, an I slice, a basic frame, or a data set including key information), or the like. A manner in which the terminal device determines the first data packet in the data packets is not particularly limited in this application.

In other words, the first data packet may include data whose service type is an XR service, and the second data packet may include data whose service type is a non-XR service. Alternatively, the first data packet may include data whose service type is an XR service, whose time to expiration is within the first time range, and whose data type is an I frame, and the second data packet may include data whose service type is an XR service and whose data type is a P frame.

It should be noted that, the foregoing time to expiration may be understood as remaining time before the data packet becomes invalid. For example, the time to expiration may be determined based on an AN-PSDB. The AN-PSDB is time from generation to invalidation of a data packet. Time to expiration of a data packet may be equal to the AN-PSDB minus time for which the data packet is buffered. For example, an AN-PSDB of a PDU to which a data packet belongs is 30 milliseconds. If the data packet is buffered for 10 milliseconds, time to expiration of the data packet is 20 milliseconds. In this case, the time to expiration of the data packet may also be expressed as remaining time of the AN-PSDB of the data packet. The AN-PSDB is a delay upper limit (namely, a maximum tolerable delay) of transmission and processing of a PDU set between UE and a RAN. The AN-PSDB may be obtained by splitting a PSDB. The PSDB is an upper limit of an end-to-end delay of a data packet between the UE and a UPF (from the UE to the RAN and from the RAN to the UPF). In other words, the PSDB may be split into the AN-PSDB between the UE and the RAN and a CN-PSDB between the RAN and the UPF. The CN-PSDB may be statically configured, or may be dynamically obtained based on time consumed for transmission between the UPF and the RAN.

It may be understood that the first data packet may be considered as a data packet that is more urgent or more important than the second data packet, so that the network device can preferentially allocate the transmission resource to the first data packet. This can improve reliability of data transmission.

It should be noted that, when the one or more of the foregoing information changes, the data packet may change from the first data packet to the second data packet, or change from the second data packet to the first data packet. The following uses the time to expiration information as an example for description. The terminal device receives a new data packet. Because time to expiration is long, the data packet is the second data packet. As time elapses, if sending of the data packet is not completed, and the time to expiration changes to being within the first time range, the data packet changes from the second data packet to the first data packet. If sending of the data packet is still not completed within the first time range, and the time to expiration changes to being less than the first time range, the data packet changes from the first data packet to the second data packet. It should be noted that, in addition to the change of the time to expiration information, a change of other information like the importance degree of the PDU set to which the data packet belongs may also cause the original first data packet to change to the second data packet, or cause the original second data packet to change to the first data packet. Details are not described herein.

The first time range may include at least one time threshold. For example, the first time range may be limited by an upper time limit. For example, the first time range is shorter than or equal to 10 milliseconds (ms). A data packet whose sending needs to be completed within 10 ms is the first data packet, and a data packet whose sending does not need to be completed within 10 ms is the second data packet. For another example, the first time range may be a time range including an upper time limit and a lower time limit. For example, the upper time limit is 10 milliseconds (ms), and the lower time limit is 2 ms. A data packet whose sending needs to be completed within the range from 2 ms to 10 ms is the first data packet, and a data packet whose sending does not need to be completed within the range from 2 ms to 10 ms is the second data packet.

It should be noted that the lower time limit of the first time range may be determined based on time needed for a procedure in which the network device allocates the transmission resource to the terminal device. For example, if time to expiration of a data packet is less than 2 ms, and the time is insufficient for the network device to allocate the transmission resource to the terminal device, the data packet does not need to be considered as the first data packet to which the transmission resource needs to be preferentially allocated.

A manner in which the terminal device determines whether a data packet is the first data packet or the second data packet may be preconfigured, or may be configured by the network device. For example, the network device may send configuration information to the terminal device, where the configuration information indicates the first time range. For example, the configuration information may include at least one time threshold, so that the terminal device can determine the first data packet and the second data packet based on the at least one time threshold and time to expiration of the data packet. For another example, the configuration information may include service type information. For example, the network device may indicate that all data packets of the XR service are first data packets.

The first time range may be configured based on any one of the following granularities: an LCG, an LCH, a resource block (resource block, RB), a PDCP entity, and a terminal device. In other words, different first time ranges may be configured for different LCGs, LCHs, PDCP entities, RBs, or terminal devices. For example, the network device may configure one first time range for each LCG, and the terminal device may sequentially determine whether time to expiration of a data packet on each LCG is within the corresponding first time range.

S320: The terminal device sends the first buffer status report (represented by a BSR #1 below) and/or the second buffer status report (represented by a BSR #2 below) to the network device. Correspondingly, the network device receives the first buffer status report (represented by the BSR #1 below) and/or the second buffer status report (represented by the BSR #2 below).

The BSR #1 indicates a buffer status of the first data packet, and the BSR #2 indicates a buffer status of the second data packet. In other words, when the plurality of data packets buffered by the terminal device include only the first data packet, the terminal device generates and sends the BSR #1. When the plurality of data packets buffered by the terminal device include only the second data packet, the terminal device generates and sends the BSR #2. When the plurality of data packets buffered by the terminal device include the first data packet and the second data packet, the terminal device respectively generates and sends the BSR #1 and the BSR #2. It should be noted that the BSR #1 and the BSR #2 may be two different MAC control elements, and the two different MAC control elements are in two different MAC protocol data units; or the BSR #1 and the BSR #2 may be two different MAC control elements in a same MAC protocol data unit; or the BSR #1 and the BSR #2 may be a same MAC control element. If the BSR #1 and the BSR #2 are in two different MAC protocol data units, the terminal device first sends a protocol data unit in which the BSR #1 is located, and then sends a MAC protocol data unit in which the BSR #2 is located. If the BSR #1 and the BSR #2 are two different MAC control elements in a same MAC protocol data unit, a MAC control element associated with the BSR #1 is located at an outer layer of a MAC control element associated with the BSR #2. If the BSR #1 and the BSR #2 are in a same MAC control element, a domain associated with the BSR #1 is located at an outer layer of a domain associated with the BSR #2. In other words, the terminal device may respectively generate the BSR #1 and the BSR #2 for two types of data packets with different characteristics, instead of uniformly generating a BSR for all the buffered data packets without distinction.

The terminal device may determine, based on a quantity of bits occupied by the BSR #1 and a quantity of bits occupied by the BSR #2, to encapsulate the BSR #1 and the BSR #2 into one MAC PDU or two MAC PDUs. For example, when a total quantity of bits occupied by the BSR #1 and the BSR #2 is less than or equal to a quantity of remaining bits in one MAC PDU, the terminal device may send the BSR #1 and the BSR #2 by sending one MAC PDU to the network device, where the MAC PDU includes the BSR #1 and the BSR #2. In other words, the BSR #1 and the BSR #2 may be encapsulated into one MAC PDU. When a total quantity of bits occupied by the BSR #1 and the BSR #2 is greater than a quantity of remaining bits in one MAC PDU, the terminal device may send the BSR #1 and the BSR #2 by using a plurality of MAC PDUs. For example, the BSR #1 and the BSR #2 may be respectively encapsulated into two MAC PDUs. Alternatively, for another example, when the BSR #1 and the BSR #2 are padding (padding) BSRs, the terminal device may pad the BSR #1 and the BSR #2 into a plurality of MAC PDUs.

The terminal device may first send a MAC PDU including the BSR #1, and then send a MAC PDU including the BSR #2. When one MAC PDU includes both the BSR #1 and the BSR #2, a bitstream corresponding to the BSR #1 may be encapsulated before a bitstream corresponding to the BSR #2. In this way, the BSR #1 may arrive at the network device earlier than the BSR #2. A speed of reporting the BSR #1 is accelerated, so that a speed of allocating the transmission resource to the first data packet can be accelerated, thereby improving the reliability of data transmission.

The terminal device may select BSR MAC CEs in different formats based on different cases. For ease of understanding of this embodiment of this application, the following first describes alternative BSR formats. This embodiment of this application provides eight possible BSR formats. The eight BSR formats may be classified into two types. For ease of description, one type may be referred to as a legacy BSR format, and the other type may be referred to as an urgent BSR format. A BSR in the legacy BSR format includes data amount information, and a BSR in the urgent BSR format includes data amount information and time information. The data amount information indicates a data amount of a data packet, and the time information indicates time within which sending of the data packet needs to be completed. Time indicated by time information in the BSR #1 is within the first time range. It may be understood that names of the legacy BSR format and the urgent BSR format are merely examples for description. This is not particularly limited in this application.

For related descriptions of the legacy BSR format, refer to the foregoing descriptions in FIG. 2. The following four BSR formats are included: a short BSR format (short BSR format), a short truncated BSR format (short truncated BSR format), a long BSR format (long BSR format), and a long truncated BSR format (long truncated BSR format).

For ease of description of this embodiment of this application, the following describes a structure of the urgent BSR format by using an example with reference to FIG. 4. The urgent BSR format may include the following four BSR formats: an urgent short BSR format (urgent short BSR format), an urgent long BSR format (urgent long BSR format), an urgent short truncated BSR format (urgent short truncated BSR format), and an urgent long truncated BSR format (urgent long truncated BSR format).

Refer to FIG. 4. The urgent short BSR format or the urgent short truncated BSR format may include identification information, data amount information, and time information. When the terminal device reports a buffer status of a data packet on an LCG, the identification information may be an LCG ID information field, indicating an identifier of the LCG. When the terminal device reports a buffer status of a data packet on an LCH, the identification information may be an LCH ID information field, indicating an identifier of the LCH. The data amount information indicates a data amount of the data packet on the LCG or the LCH. The time information indicates time within which sending of the data packet on the LCG or the LCH needs to be completed. A BSR in the urgent long format or the urgent long truncated format may include a plurality of pieces of identification information, a plurality of pieces of data amount information, and a plurality of pieces of time information. Similarly, the plurality of pieces of identification information may respectively indicate identifiers of a plurality of LCGs or LCHs, the plurality of pieces of data amount information respectively indicate data amounts of data packets on the plurality of LCGs or LCHs, and the plurality of pieces of time information respectively indicate time within which sending of the data packets on the plurality of LCGs or LCHs needs to be completed.

It may be understood that, in embodiments of this application, an "indication" may include a direct indication and an indirect indication, or may include an explicit indication and an implicit indication. Information indicated by specific information (for example, the foregoing time information) is referred to as to-be-indicated information. During specific implementation, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, the specific information may be indicated by using an arrangement order of all pieces of information that is pre-agreed on (for example, specified in a protocol).

For example, the time information may directly indicate the time within which sending of the data packet needs to be completed. For example, the time information may include a value or value range of the time within which sending of the data packet needs to be completed. For example, the time information includes time to expiration of the data packet, and the time to expiration indicates that the time within which sending of the data packet needs to be completed is 5 ms, so that the network device can learn that the terminal device has a data packet whose sending needs to be completed within 5 ms. Alternatively, a time information field may indirectly indicate the time within which sending of the data packet needs to be completed. For example, the time information may include an index value of the time. The network device may determine, based on the index value, a value or value range of the time within which sending of the data packet needs to be completed. For example, if the index value is "1", the network device learns, based on the index value, that the terminal device has a data packet whose sending needs to be completed within a range from 0 ms to 5 ms. If the index value is "2", the network device learns, based on the index value, that the terminal device has a data packet whose sending needs to be completed within a range from 5 ms to 10 ms. The time information may further include a flag (flag) bit or an indicator (indicator) bit, indicating that sending of the data packet needs to be completed within the first time range. For example, if the flag bit is 1, it indicates that sending of the corresponding data packet needs to be completed within the first time range. Alternatively, if the flag bit is 1, it indicates that sending of the corresponding data packet needs to be completed before another data packet.

It should be further noted that the terminal device may support all the eight BSR formats described above, or the terminal device may support only some of the eight BSR formats. For example, the terminal device may support the four legacy BSR formats and any one of the four urgent BSR formats (for example, the urgent short BSR format). This is not particularly limited in this application.

The terminal device may select the BSR format in a plurality of manners.

In a first possible implementation, the BSR #1 is in one of the foregoing urgent BSR formats, and the BSR #2 is in one of the foregoing legacy BSR formats. In other words, the BSR #1 may include time information and data amount information #1, where the time information indicates time within which sending of the first data packet needs to be completed (or time to expiration), and the data amount information #1 indicates a data amount of the first data packet. The BSR #2 may include data amount information #2, where the data amount information #2 indicates a data amount of the second data packet, and does not include the time information indicating the time within which sending of the first data packet needs to be completed.

If the terminal device supports a plurality of urgent BSR formats and a plurality of legacy BSR formats, the terminal device selects one of the plurality of urgent BSR formats to generate the BSR #1, and selects one of the plurality of legacy BSR formats to generate the BSR #2. The following describes a method for selecting an urgent BSR format from the four urgent BSR formats to generate the BSR #1 according to an embodiment of this application.

If the BSR #1 is a regular BSR or a periodic BSR,
when the buffered first data packet is from one LCG, LCH, or PDU set, the terminal device may select the urgent short BSR format to generate the BSR #1; or
when the buffered first data packet is from a plurality of LCGs, LCHs, or PDU sets, the terminal device may select the urgent long BSR format to generate the BSR #1.

If the BSR #1 is a padding BSR,
when a quantity of padding bits is greater than or equal to a quantity of bits needed for an urgent long BSR format, the terminal device may select the urgent long BSR format to generate the BSR #1;
when a quantity of padding bits is less than a quantity of bits needed for an urgent long BSR format and is greater than or equal to a quantity of bits needed for an urgent short BSR format, and the first data packet is from one LCG, LCH, or PDU set, the terminal device may select the urgent short BSR format;
when a quantity of padding bits is equal to a quantity of bits needed for an urgent short BSR format, and the first data packet is carried in a plurality of LCGs, LCHs, or PDU sets, the terminal device may select the urgent short truncated BSR format; or
when a quantity of padding bits is greater than a quantity of bits needed for an urgent short BSR format and is less than a quantity of bits needed for an urgent long BSR format, and the first data packet is carried in a plurality of LCGs, LCHs, or PDU sets, the terminal device may select the urgent long truncated BSR format.

The foregoing describes the method for selecting, by the terminal device, an urgent BSR format from the four urgent BSR formats to generate the BSR #1. It may be understood that this is not particularly limited in this application. For example, if the terminal device supports two urgent BSR formats: the urgent long BSR format and the urgent short BSR format, the terminal device may select one from the two urgent BSR formats based on a quantity of LCGs or LCHs in which the first data packet is carried. If the terminal device supports a plurality of legacy BSR formats, the terminal device may select a legacy BSR format from the plurality of legacy BSR formats to generate the BSR #2. The following describes a method for selecting a legacy BSR format from the four legacy BSR formats to generate the BSR #2 according to an embodiment of this application.

If the BSR #2 is a regular BSR or a periodic BSR,
when the buffered second data packet is from one LCG, LCH, or PDU set, the terminal device may select the legacy short BSR format to generate the BSR #2; or
when the buffered second data packet is from a plurality of LCGs, LCHs, or PDU sets, the terminal device may select the legacy long BSR format to generate the BSR #2.

If the BSR #2 is a padding BSR, the terminal device may select a format of the BSR #2 based on a quantity of remaining bits obtained by subtracting a quantity of bits occupied by the BSR #1 from a quantity of padding bits.

When the quantity of remaining bits is greater than or equal to a quantity of bits needed for a legacy long BSR format, the terminal device may select the legacy long BSR format to generate the BSR #2;
when the quantity of remaining bits is less than a quantity of bits needed for a legacy long BSR format and is greater than or equal to a quantity of bits needed for a legacy short BSR format, and the second data packet is carried in one LCG or LCH, the terminal device may select the legacy short BSR format;
when the quantity of remaining bits is equal to a quantity of bits needed for a legacy short BSR format, and the second data packet is carried in a plurality of LCGs or LCHs, the terminal device may select the legacy short truncated BSR format; or
when the quantity of remaining bits is greater than a quantity of bits needed for a legacy short BSR format and less than a quantity of bits needed for a legacy long BSR format, and the first data packet is carried in a plurality of LCGs or LCHs, the terminal device may select the legacy long truncated BSR format.

The foregoing describes the method for selecting, by the terminal device, a legacy BSR format from the four legacy BSR formats to generate the BSR #2. If the data packets buffered by the terminal device include the first data packet and the second data packet, the terminal device may first generate the BSR #1 by using the foregoing method for selecting the urgent BSR format, and then generate the BSR #2 by using the foregoing method for selecting the legacy BSR format. If the data packets buffered by the terminal device include the first data packet but do not include the second data packet, the terminal device may generate the BSR #1 by using the foregoing method for selecting the urgent BSR format. If the data packets buffered by the terminal device include the second data packet but do not include the first data packet, the terminal device generates the BSR #2 by using the foregoing method for selecting the legacy BSR format. In this case, the quantity of remaining bits is equal to the quantity of padding bits.

In the possible implementation described above, provided that the first data packet exists, the terminal device generates the BSR #1 by using the urgent BSR format, and generates the BSR #2 by using the urgent BSR format. In other words, the terminal device may report the data amount of the first data packet and the time within which sending of the first data packet needs to be completed, report the data amount of the second data packet, and not need to report the time within which sending of the second data packet needs to be completed. The network device may allocate the transmission resource to the first data packet based on the time within which sending of the first data packet needs to be completed. For different characteristics of the first data packet and the second data packet, the terminal device respectively generates the BSR #1 including the time information and the BSR #2 including no time information. The BSR #1 including the time information can improve reliability of allocating, by the network device, the transmission resource to a data packet whose sending needs to be completed within the first time range. The BSR #2 may not need to include the time information, so that the transmission resources occupied by the BSR can be reduced.

In a second possible implementation, the BSR #1 is in one of the foregoing legacy BSR formats, the BSR #1 includes indication information, and the indication information indicates the buffer status of the first data packet indicated by the BSR #1.

For example, the terminal device generates the BSR #1 and the BSR #2 by using the legacy BSR format. Different from the first implementation in which the time information indicates the time within which sending of the first data packet needs to be completed, in this implementation, the indication information in the BSR #1 indicates that the BSR #1 is a BSR of the first data packet. In this way, the terminal device can report the buffer status of the first data packet and the buffer status of the second data packet by using a small quantity of bits.

Optionally, the BSR #1 includes a sub-header field, and the sub-header field includes the indication information. A structure of the sub-header field is shown in FIG. 2. The indication information may be an LCID or an eLCID in the sub-header field, or the indication information may be an independent information field.

When the indication information is an LCID or an eLCID in the sub-header field, a first value of the LCID or the eLCID in the BSR #1 may directly or indirectly indicate that the BSR #1 indicates the buffer status of the first data packet.

When the indication information is an independent information field, the indication information may use any one or more reserved bits in the sub-header field. For example, one bit in the sub-header field is configured to indicate whether a corresponding data packet is the first data packet. For example, when the bit is set to 1, it indicates that the corresponding data packet is the first data packet.

It should be noted that, for the BSR #2, the network device may determine, based on the LCID or the eLCID not being the first value, a data packet corresponding to the BSR #2. Alternatively, when the foregoing bit is set to 0, it indicates that the corresponding data packet is the second data packet. This is not particularly limited in this application.

It should be further noted that the BSR #1 may alternatively include both the indication information and the time information. In other words, the BSR #1 may be in the urgent BSR format including the time information, and a sub-header included in the BSR #1 may include the indication information. In this case, the indication information may further indicate, by indicating the urgent BSR format, that the BSR #1 is a BSR of the first data packet. For example, the first value of the LCID corresponds to an urgent BSR format. The network device may learn, according to a rule for selecting the urgent BSR format, that the BSR #1 is a BSR of the first data packet. This is not particularly limited in this application.

Optionally, sending of the BSR #2 is completed, and the terminal device does not restart a periodic BSR timer (periodicBSR-Timer). In other words, the terminal device may not need to restart the periodic BSR timer each time sending of a BSR is completed. The terminal device may restart the periodic BSR timer after sending of a BSR other than a BSR of a data packet whose sending needs to be completed within the first time is completed. For example, the terminal device may restart the periodic BSR timer after sending of a BSR in a format other than the urgent BSR format is completed.

If the terminal device restarts the periodic BSR timer each time sending of a BSR is completed, and if the terminal device frequently sends the BSR of the first data packet due to another trigger condition and frequently restarts the periodic BSR timer, it is difficult for the terminal device to send a BSR of a periodic type. This may cause a case in which a BSR that is of the second data packet and that is mostly of the periodic type cannot be reported for a long time period. In this way, in this embodiment, the terminal device does not restart the periodic BSR timer after sending of the BSR #1 is completed, and the terminal device restarts the periodic BSR timer after sending of the BSR #2 is completed. This can improve reliability of BSR reporting.

It should be noted that, if the BSR #2 is a padding BSR, and the quantity of padding bits is insufficient to report the entire buffer status of the second data packet, the buffer status of the second data packet may be decomposed into a plurality of BSRs #2 for reporting. In this case, the terminal device may not restart the periodic BSR timer before sending of all the plurality of BSRs #2 is completed.

In some implementations, if the terminal device determines the first data packet based on the time to expiration information, in other words, the time to expiration of the first data packet is within the first time range, the terminal device generates the BSR #1 based on the first data packet. However, as time elapses, the BSR #1 of the first data packet has no opportunity to be sent, and the time to expiration of the first data packet changes to being outside the first time range. In this case, sending of the first data packet does not need to be completed within the first time range. In this case, for a BSR #1 that has been generated/triggered based on a data packet whose sending needs to be completed within the first time range, the terminal device may cancel the triggered BSR #1, or may cancel the BSR #1, re-determine that sending of the first data packet does not need to be completed within the first time range, and generate reporting based on a data packet whose sending does not need to be completed within the first time range. Alternatively, the terminal device may not cancel sending of the BSR #1, or may not cancel the triggered BSR #1, but set the data amount information in the BSR #1 to indicate that the data amount is 0. In this way, after receiving the BSR #1, the network device may learn that the data amount of the data packet whose sending needs to be completed within the first time range is 0. Alternatively, the terminal device may not cancel sending of the BSR #1, or may not cancel the triggered BSR #1, but set the data amount information in the BSR #1 to indicate a remaining data amount obtained by subtracting, from the current data amount, a data amount obtained after a change from being within the first time range to being outside the first time range. For example, if an original quantity is 10 bytes, and as the time elapses, time to expiration corresponding to a data packet of 2 bytes changes to being outside the first time range, the data amount information in the BSR #1 is set to indicate that the data amount is 8 bytes.

S330: The network device determines the transmission resource of the first data packet and/or the transmission resource of the second data packet.

When the network device receives the BSR #1 from the terminal device, the network device may determine, based on the time information and/or the indication information in the BSR #1, that the BSR #1 is a BSR of the first data packet. For example, sending of the first data packet needs to be completed within the first time range, and the network device may preferentially allocate the transmission resource to the first data packet. When the network device receives the BSR #2 from the terminal device, the network device may determine, based on the BSR #2 including no time information, the BSR #2 including the indication information indicating that the BSR #2 is a BSR of the second data packet, or another manner, that the BSR #2 is a BSR of the second data packet, so that the network device can consider the second data packet as a common data packet for processing.

S340: The network device sends grant information to the terminal device. Correspondingly, the terminal device receives the grant information from the network device.

The grant information indicates the transmission resource of the first data packet and/or the transmission resource of the second data packet.

S350: The terminal device sends the plurality of transmitted data packets to the network device.

The terminal device sends the first data packet and/or the second data packet based on the transmission resource indicated by the grant information.

Based on this technical solution, the data packets buffered by the terminal device include data packets with different attributes, and the terminal device may respectively generate the first buffer status report and the second buffer status report for the data packets with the different attributes, so that when allocating the transmission resources to the first data packet and the second data packet based on the two buffer status reports, the network device can consider the different attributes of the first data packet and the second data packet. This can improve performance of buffer status reporting.

It may be understood that the foregoing describes an implementation in which the BSR #1 includes a time domain (namely, the time information) and the BSR #2 does not include a time domain. In another possible implementation, the BSR #1 and the BSR #2 both may include a time domain. In this case, the time domain in the BSR #2 may be set by default (for example, a value of the time domain is 0, an index of the time domain indicates the second data packet, or a flag bit of the time domain indicates the second data packet) to indicate that the BSR #2 is for reporting the buffer status of the second data packet. In another possible implementation, neither the BSR #1 nor the BSR #2 may include a time domain, and it is determined, by using indication information in sub-header fields of the BSR #1 and the BSR #2, that the buffer status of the first data packet or the buffer status of the second data packet is indicated.

It should be noted that any manner of generating the BSR #1 described in this embodiment of this application may be used independently, and any manner of generating the BSR #2 may be used independently. Any manner of generating the BSR #1 and any manner of generating the BSR #2 may be used together. A sequence of generating the BSR #1 and the BSR #2 by the terminal device is not limited in this embodiment of this application. The sequence may be related to the buffered data packets, or may be related to a manner of generating a BSR by the terminal device.

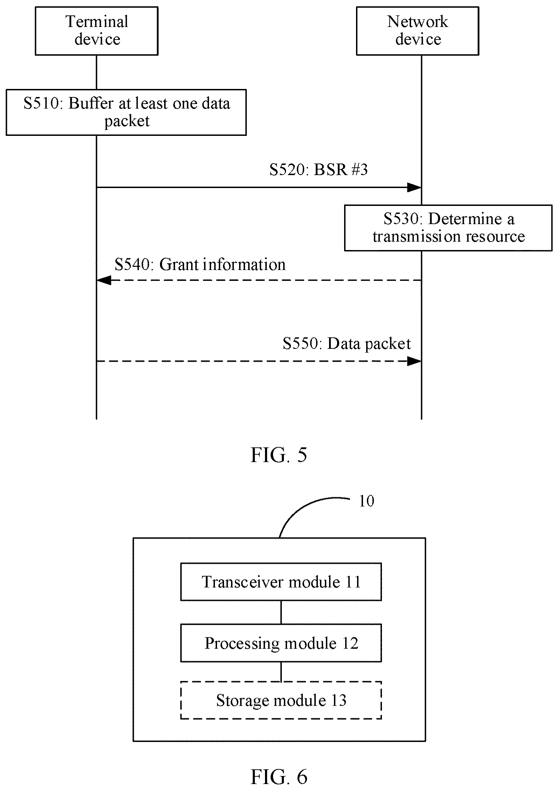

This application further provides a buffer status reporting method. Different from the method shown in FIG. 3, the terminal device may report buffer statuses of data packets with different characteristics by using one BSR, and perform indication by using indication information and/or time information in the BSR. The following describes the method with reference to FIG. 5.

FIG. 5 is a schematic flowchart of another buffer status reporting method according to an embodiment of this application.

S510: A terminal device buffers at least one data packet.

For ease of description, in the embodiment described in FIG. 5, a first data packet and a second data packet are still used to represent data packets that differ in at least one attribute. For example, the first data packet is still used to represent a data packet that needs to be completed within a first time range, and the second data packet is still used to represent a data packet that does not need to be completed within the first time range. For related descriptions of the first data packet, the second data packet, and the first time range, refer to the descriptions in step S310 in FIG. 3. Details are not described herein again. There are the following three cases for the at least one data packet depending on whether the at least one data packet includes the first data packet: Case 1: Only the first data packet is included. Case 2: The first data packet and the second data packet are included. Case 3: Only the second data packet is included.

S520: The terminal device sends a buffer status report (represented by a BSR #3 below) to a network device. Correspondingly, the network device receives the BSR #3 from the terminal device.

The BSR #3 includes indication information and/or time information. The indication information indicates whether the at least one data packet includes the first data packet, and the time information indicates time within which sending of the at least one data packet needs to be completed. In other words, the terminal device may generate the BSR #3 in any one of the following three forms.

Form 1: The BSR #3 includes the indication information, and does not include the time information. A sub-header field of the BSR #3 may include the indication information, and the BSR #3 may be in one of legacy BSR formats. The indication information may be an LCID or an eLCID in the sub-header field, or the indication information may be an independent information field. For related descriptions of the indication information and the legacy BSR format, refer to the descriptions of S320 in FIG. 3. Details are not described herein again. In this case, the network device may determine, based on the indication information, whether the at least one data packet includes the first data packet. If the at least one data packet includes the first data packet, the network device may preferentially allocate a transmission resource to all the at least one data packet.

Form 2: The BSR #3 includes the time information, and does not include the indication information. A format of the BSR #3 may be one of urgent BSR formats. For related descriptions of the urgent BSR format, refer to the descriptions of S320 in FIG. 3. Details are not described herein again. In this case, the network device may determine, based on the time information in the BSR #3, specific data packets that are in the at least one data packet and whose sending needs to be completed within the first time range, to preferentially allocate transmission resources to the data packets that are in the at least one data packet and whose sending needs to be completed within the first time range.

Form 3: The BSR #3 includes the time information and the indication information. A sub-header field of the BSR #3 may include the indication information, and a format of the BSR #3 may be one of urgent BSR formats. In this way, the network device may preferentially allocate a transmission resource to a data packet that is in the at least one data packet and whose sending needs to be completed within the first time range.

For ease of description, the BSRs in the foregoing three forms are collectively referred to as new BSRs in the following. The terminal device may preconfigure the new BSR in one of the forms to generate the BSR #3. Alternatively, the terminal device may determine, depending on whether the at least one data packet includes the first data packet, whether to use the new BSR. If the terminal device determines that the at least one data packet includes the first data packet, the terminal device may use the BSR #3 in any form of the new BSR described above (where if the indication information is included, the indication information indicates that the at least one data packet includes the first data packet). If the terminal device determines that the at least one data packet does not include the first data packet, the terminal device may select, based on a stipulation in an existing protocol, a BSR that does not include the indication information or the time information. For example, if the at least one data packet includes the first data packet, the BSR #3 includes the time information, or the time information and the indication information. If the at least one data packet does not include the first data packet, the BSR #3 does not include the time information, so that bit consumption can be reduced.

It should be noted that, for the BSR #3 that includes the time information, the time information may indicate time within which sending of all the at least one data packet needs to be completed. Alternatively, the time information may indicate time within which sending of the first data packet in the at least one data packet needs to be completed. For example, the first data packet in the at least one data packet is configured with a time domain in the BSR #3, and the second data packet in the at least one data packet is configured with a time information resource in the BSR #3. For another example, each of the at least one data packet is configured with a time domain in the BSR #3. A time domain corresponding to the first data packet indicates time within which sending of the first data packet needs to be completed. A time domain corresponding to the second data packet is set by default (for example, a value of the time domain is 0, an index of the time domain indicates the second data packet, or a flag bit of the time domain indicates a non-first data packet) to indicate that sending of the second data packet does not need to be completed within the first time range.

For a manner in which the terminal device determines whether the at least one data packet includes the first data packet, refer to the descriptions of step S310 in FIG. 3. To be specific, the terminal device may determine the first data packet by using at least one of the following information: service type information, time to expiration information, importance degree information of a PDU set to which the data packet belongs, and type information of the PDU set to which the data packet belongs. For more detailed descriptions, refer to the descriptions of step S310 in FIG. 3. Details are not described herein again.

Optionally, when the at least one data packet includes the first data packet and the second data packet, a bitstream corresponding to buffer status information of the first data packet may be encapsulated into a bitstream corresponding to buffer status information of the second data packet. In this way, the buffer status information of the first data packet may arrive at the network device earlier than the buffer status information of the second data packet, so that the network device can accelerate a speed of allocating the transmission resource to the first data packet. This improves reliability of data transmission.

Optionally, the at least one data packet includes the second data packet, sending of the BSR #3 is not completed, and the terminal device does not restart a periodic BSR timer. In other words, when the BSR #3 includes the buffer status information of the second data packet, sending of the buffer status information of the second data packet is not completed, and the terminal device does not restart the periodic BSR timer. After sending of the buffer status information of the second data packet is completed, the terminal device may restart the periodic BSR timer, so that reliability of BSR reporting can be improved.

S530: The network device determines a transmission resource of the at least one data packet.

When the BSR #3 uses Form 1, to be specific, includes the indication information, and does not include the time information, if the indication information indicates that the at least one data packet includes the first data packet, the network device may preferentially allocate the transmission resource to all the at least one data packet. When the BSR #3 uses Form 2 or Form 3, to be specific, includes the time information, the network device may determine the first data packet in the at least one data packet based on the time information, and preferentially allocate the resource to the first data packet.

S540: The network device sends grant information to the terminal device. Correspondingly, the terminal device receives the grant information from the network device.

The grant information indicates the transmission resource of the at least one data packet.

S550: The terminal device sends the at least one data packet to the network device. Correspondingly, the network device receives the at least one data packet from the terminal device.

The terminal device may send the at least one data packet by using the transmission resource indicated by the grant information.

Based on this technical solution, the terminal device may include the indication information and/or the time information in the buffer status report, indicate, by using the indication information, whether the at least one data packet includes a data packet with an attribute of the first data packet, and/or indicate, by using the time information, an attribute that is of the at least one data packet and that is related to the time within which sending of the at least one data packet needs to be completed, so that the network device can allocate the transmission resource based on the attribute of the at least one data packet, to improve performance of buffer status report reporting.

The foregoing describes a manner in which the terminal device reports a buffer status of a buffered PDU. In some embodiments, some of the PDUs buffered by the terminal device may be discarded due to a transmission failure. For example, the PDU has not obtained the transmission resource, and is discarded due to PDCP timeout (discardtimer), or the PDU has been sent to the network device, but is discarded by the network device due to a decoding or check failure caused by a poor network condition. A value of a PDCP discard timer (discard timer) of a PDU set may be determined based on a value of an AN-PSDB. If duration for which a data packet waits to be sent in the terminal device is close to the AN-PSDB, in other words, time to expiration of the data packet is less than or equal to a preset threshold, the data packet is referred to as being about to be invalid.

When a quantity of discarded PDUs in a PDU set reaches a specific value, the terminal device may discard a remaining PDU in the PDU set, in other words, trigger frame-level packet loss or PDU set discarding (PDU set discarding). This is because the remaining PDU is no longer necessary to be sent. Even if the network device successfully receives the remaining PDU, the network device cannot successfully obtain information based on the remaining PDU. This embodiment of this application further provides a PDU discarding method. The following describes the method.

Step 1: The network device determines whether to perform PDU set integrated handling (PDU set integrated handling).

The PDU set integrated handling means that when a quantity of discarded PDUs in a PDU set is greater than or equal to N, discarding processing is performed on all PDUs in the PDU set. N is a positive integer.

The network device may determine, based on a QoS parameter of a QoS flow associated with a DRB associated with a PDCP entity corresponding to the PDU set, whether to perform the PDU set integrated handling. The QoS parameter includes enabling information #1, and the enabling information #1 indicates whether to perform the PDU set integrated handling on a PDU in the QoS flow. The following describes three possible manners.

Manner 1: If values of enabling information #1 of QoS flows mapped to a same DBR are the same, and the enabling information #1 indicates that the PDU set integrated handling needs to be performed on a PDU in the QoS flow, the network device determines that a PDCP entity associated with the DBR needs to perform the PDU set integrated handling on an associated PDU set.

Manner 2: If enabling information #1 of at least one QoS flow included in QoS flows mapped to a same DBR indicates that the PDU set integrated handling needs to be performed on a PDU in the QoS flow, the network device determines that a PDCP entity associated with the DBR needs to perform the PDU set integrated handling on an associated PDU set.

Manner 3: Only QoS flows whose enabling information #1 has a same value can be mapped to a same DBR. If the enabling information #1 indicates to perform the PDU set integrated handling on a related QoS flow, the network device determines that a PDCP entity associated with the DBR needs to perform the PDU set integrated handling on an associated PDU set.

Step 2: The network device sends PDCP enabling information #2 to the terminal device.

According to step 1, the network device determines enabling information #2 of a PDCP entity based on the enabling information #1, where the enabling information #2 indicates the PDCP entity to perform the PDU set integrated handling.

It may be understood that because a PDCP layer of the terminal device cannot obtain the enabling information #1 of the QoS flow, and the PDU set integrated handling performed by the PDCP entity needs to be consistent with the PDU set integrated handling on the associated QoS flow, the network device may indicate, by using a PDCP configuration (including the enabling information #2) and based on a learned parameter (the enabling information #1) of the PDU set integrated handling on the QoS flow, the PDCP entity of the terminal device to perform the PDU set integrated handling.

The enabling information #2 may directly indicate the PDCP entity of the terminal device to perform the PDU set integrated handling. Alternatively, the PDCP enabling information #2 may indirectly indicate the PDCP entity of the terminal device to perform the PDU set integrated handling. For example, the PDCP enabling information #2 includes information about a PDU set discard timer. When a quantity of PDUs that are in the PDU set and that reach duration specified by the PDU set discard timer is greater than or equal to N, all the PDUs in the PDU set are discarded.

Step 3: The terminal device performs the PDU set integrated handling based on the PDCP enabling information #2.

When N PDUs in the PDU set reach time specified by the PDU set discard timer, the terminal device discards all PDUs in the PDU set. In other words, if the terminal device receives the enabling information #2, the terminal device may not discard a PDU based on a PDU-level discard timer, but discard all the PDUs in the PDU set based on a PDU set-level discard timer.

For example, a discard timer of an M^{th} PDU in the PDU set may be set to be a PDU set-level discard timer. When the M^{th} PDU is discarded due to timeout (M is a positive integer, and M may be equal to N), the terminal device may simultaneously discard all the PDUs in the PDU set.

It should be noted that, in this example, because the discard timer of the M^{th} PDU may be used for discard timing of the entire PDU set in this example, the discard timer of the M^{th} PDU cannot stop timing because the M^{th} PDU is successfully sent. In other words, a PDCP entity of a transmitter side device (the terminal device in this example) determines, by using a PDCP status report, a lower-layer indication, or another manner, that the M^{th} PDU has been successfully received, and the transmitter side device, namely, the terminal device, does not discard an SDU corresponding to the M^{th} PDU, so that the timer of the M^{th} PDU continues timing.

Corresponding to the methods provided in the foregoing method embodiments, embodiments of this application further provide corresponding apparatuses. The apparatuses include corresponding modules configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

FIG. 6 is a block diagram of a communication apparatus 10 according to an embodiment of this application. The apparatus 10 includes a transceiver module 11 and/or a processing module 12. The transceiver module 11 may implement a corresponding communication function, and the processing module 12 is configured to perform data processing, or the transceiver module 11 is configured to perform receiving and sending-related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of a device or a network element in the foregoing method embodiments.

In a first design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving and sending related operations of the terminal device in the foregoing method embodiments. The processing module 12 may be configured to perform a processing related operation of the terminal device in the foregoing method embodiments.

In a possible implementation, the apparatus 10 may implement the steps or procedures performed by the terminal device in the embodiment shown in FIG. 3. The processing module 12 is configured to buffer a plurality of data packets, where the plurality of data packets include a first data packet and a second data packet. The transceiver module 11 is configured to send a first buffer status report and a second buffer status report, where the first buffer status report indicates a buffer status of the first data packet, and the second buffer status report indicates a buffer status of the second data packet. The first data packet and the second data packet differ in at least one of the following attributes: a service type, time to expiration, an importance degree of a protocol data unit set to which the data packet belongs, and a type of the protocol data unit set to which the data packet belongs.

In another possible implementation, the apparatus 10 may implement the steps or procedures performed by the terminal device in the embodiment shown in FIG. 5. The processing module 12 is configured to buffer at least one data packet. The transceiver module 11 is configured to send a buffer status report, where the buffer status report indicates a buffer status of the at least one data packet, the buffer status report includes indication information and/or time information, the indication information indicates whether the at least one data packet includes a first data packet, and the time information indicates time within which sending of the at least one data packet needs to be completed. The first data packet is related to at least one of the following information: service type information, time to expiration information, importance degree information of a protocol data unit set to which the first data packet belongs, or type information of the protocol data unit set to which the first data packet belongs.

In a second design, the apparatus 10 may correspond to the network device in the foregoing method embodiments, or may be a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform a processing related operation of the network device in the foregoing method embodiments.

In a possible implementation, the apparatus 10 may implement the steps or procedures performed by the network device in the embodiment shown in FIG. 3. The transceiver module 11 is configured to receive a first buffer status report and a second buffer status report, where the first buffer status report indicates a buffer status of a first data packet, and the second buffer status report indicates a buffer status of a second data packet. The processing module 12 is configured to determine a transmission resource of the first data packet and a transmission resource of the second data packet based on the first buffer status report and the second buffer status report. The first data packet and the second data packet differ in at least one of the following attributes: a service type, time to expiration, an importance degree of a protocol data unit set to which the data packet belongs, and a type of the protocol data unit set to which the data packet belongs.

In another possible implementation, the apparatus 10 may implement the steps or the procedures performed by the network device in the embodiment shown in FIG. 5. The transceiver module 11 is configured to receive a buffer status report from a terminal device, where the buffer status report indicates a buffer status of at least one data packet, the buffer status report includes indication information and/or time information, the indication information indicates whether the at least one data packet includes a first data packet, and the time information indicates time within which sending of the at least one data packet needs to be completed. The processing module 12 is configured to determine a transmission resource of the at least one data packet based on the buffer status report. The first data packet is related to at least one of the following information: service type information, time to expiration information, importance degree information of a protocol data unit set to which the first data packet belongs, or type information of the protocol data unit set to which the first data packet belongs. The network device determines the transmission resource of the at least one data packet based on the buffer status report.

It should be understood that specific processes in which the modules perform the foregoing corresponding steps are described in detail in the foregoing method embodiments. For brevity, details are not described herein.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art may understand that the apparatus 10 may be specifically the terminal device in the foregoing embodiments, and may be configured to perform procedures and/or steps corresponding to the terminal device in the foregoing method embodiments; or the apparatus 10 may be specifically the network device in the foregoing embodiments, and may be configured to perform procedures and/or steps corresponding to the network device in the foregoing method embodiments. To avoid repetition, details are not described herein again.

The apparatus 10 in the foregoing solutions has a function of implementing corresponding steps performed by the device (for example, the terminal device or the network device) in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and processing-related operations in the method embodiments.

In addition, the transceiver module 11 may alternatively be a transceiver circuit (for example, may include a receiving circuit and a sending circuit), and the processing module may be a processing circuit.

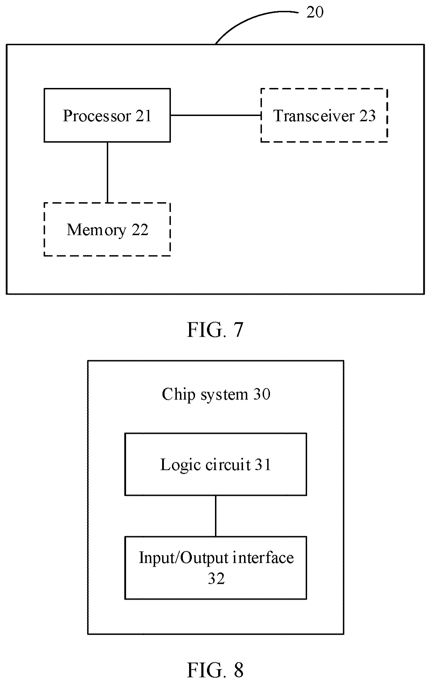

FIG. 7 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 7, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the terminal device in the foregoing method embodiments.

In another solution, the apparatus 20 is configured to implement operations performed by the network device in the foregoing method embodiments.

It should be understood that, the processor mentioned in this embodiment of this application may be a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 8 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and output information processed by the chip system 30, or input to-be-processed data or signaling information to the chip system 30 for processing.

In a solution, the chip system 30 is configured to implement operations performed by the terminal device in the foregoing method embodiments. For example, the logic circuit 31 is configured to implement processing related operations performed by the terminal device in the foregoing method embodiments, as shown in FIG. 6 and FIG. 7, and the input/output interface 32 is configured to implement sending and/or receiving related operations performed by the terminal device in the foregoing method embodiments, as shown in FIG. 6 and FIG. 7.

In another solution, the chip system 30 is configured to implement operations performed by the network device in the foregoing method embodiments. For example, the logic circuit 31 is configured to implement processing related operations performed by the network device in the foregoing method embodiments, as shown in FIG. 6 and FIG. 7, and the input/output interface 32 is configured to implement sending and/or receiving related operations performed by a virtualized infrastructure manager in the foregoing method embodiments, as shown in FIG. 6 and FIG. 7.

An embodiment of this application further provides a computer-readable storage medium. The computer-readable storage medium stores computer instructions for implementing the methods performed by the devices in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the device (for example, the terminal device or the network device) in the foregoing method embodiments is implemented.

An embodiment of this application further provides a communication system, including the foregoing terminal device and network device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by the computer, or a data storage device, for example, a server, a data center, or the like integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A buffer status reporting method, wherein the method comprises:
buffering a plurality of data packets, wherein the plurality of data packets comprise a first data packet and a second data packet; and
sending a first buffer status report and a second buffer status report to a network device, wherein the first buffer status report indicates a buffer status of the first data packet, and the second buffer status report indicates a buffer status of the second data packet, wherein
the first data packet and the second data packet differ in at least one of the following attributes: a service type, time to expiration, an importance degree of a protocol data unit set to which the data packet belongs, or a type of the protocol data unit set to which the data packet belongs.

2. The method according to claim 1, wherein sending the first buffer status report and the second buffer status report to the network device comprises:
sending a protocol data unit to the network device, wherein the protocol data unit comprises the first buffer status report and the second buffer status report.

3. The method according to claim 1 or 2, wherein the first buffer status report comprises first data amount information and time information, the first data amount information indicates a data amount of the first data packet, and the time information indicates time within which sending of the first data packet needs to be completed; and the second buffer status report comprises second data amount information, and the second data amount information indicates a data amount of the second data packet.

4. The method according to claim 1 or 2, wherein the first buffer status report comprises indication information, and the indication information indicates that the first buffer status report indicates the buffer status of the first data packet.

5. The method according to claim 4, wherein the first buffer status report comprises a sub-header field, and the indication information is a logical channel identifier field or an extended logical channel identifier field of the sub-header field.

6. The method according to any one of claims 1 to 5, wherein
sending of the second buffer status report is not completed or the second buffer status report is in a truncated buffer status report format, and a periodic buffer status report timer is not restarted.

7. The method according to any one of claims 1 to 6, wherein sending of the first data packet needs to be completed within a first time range.

8. The method according to any one of claims 1 to 7, wherein the method further comprises:
receiving configuration information from the network device, wherein the configuration information indicates the first time range.

9. The method according to any one of claims 1 to 8, wherein a format of the first buffer status report is determined based on at least one of the following information: a quantity of logical channels from which the first data packet comes, a quantity of logical channel groups from which the first data packet comes, a quantity of protocol data unit sets from which the first data packet comes, a type of the first buffer status report, or a quantity of bits occupied by the first buffer status report.

10. The method according to any one of claims 1 to 9, wherein the second buffer status report is a padding buffer status report, and a format of the second buffer status report is determined based on the quantity of bits occupied by the first buffer status report.

11. A buffer status reporting method, wherein the method comprises:
buffering at least one data packet; and
sending a buffer status report to a network device, wherein the buffer status report indicates a buffer status of the at least one data packet, the buffer status report comprises indication information and/or time information, the indication information indicates whether the at least one data packet comprises a first data packet, the time information indicates time within which sending of the at least one data packet needs to be completed, and the first data packet is related to at least one of the following information: service type information, time to expiration information, importance degree information of a protocol data unit set to which the first data packet belongs, or type information of the protocol data unit set to which the first data packet belongs.

12. The method according to claim 11, wherein before sending the buffer status report to the network device, the method further comprises:
determining that the at least one data packet comprises the first data packet, wherein the buffer status report comprises the time information, or the time information and the indication information, or the indication information.

13. The method according to claim 11 or 12, wherein sending of the first data packet needs to be completed within a first time range.

14. The method according to any one of claims 11 to 13, wherein the method further comprises:
receiving configuration information from the network device, wherein the configuration information indicates the first time range.

15. The method according to any one of claims 11 to 14, wherein the buffer status report comprises a sub-header field, and the sub-header field comprises the indication information.

16. The method according to claim 15, wherein the indication information is a logical channel identifier field or an extended logical channel identifier field of the sub-header field.

17. The method according to any one of claims 11 to 16, wherein
the at least one data packet does not comprise the first data packet, sending of the buffer status report is not completed or the buffer status report is in a truncated buffer status report format, and a periodic buffer status report timer is not restarted.

18. A buffer status reporting method, wherein the method comprises:
receiving a first buffer status report and a second buffer status report from a terminal device, wherein the first buffer status report indicates a buffer status of a first data packet, and the second buffer status report indicates a buffer status of the second data packet; and
determining a transmission resource of the first data packet and a transmission resource of the second data packet based on the first buffer status report and the second buffer status report, wherein
the first data packet and the second data packet differ in at least one of the following attributes: a service type, time to expiration, an importance degree of a protocol data unit set to which the data packet belongs, or a type of the protocol data unit set to which the data packet belongs.

19. The method according to claim 18, wherein receiving the first buffer status report and the second buffer status report from the terminal device comprises:
receiving a protocol data unit from the terminal device, wherein the protocol data unit comprises the first buffer status report and the second buffer status report.

20. The method according to claim 18 or 19, wherein the first buffer status report comprises first data amount information and time information, the first data amount information indicates a data amount of the first data packet, and the time information indicates time within which sending of the first data packet needs to be completed; and the second buffer status report comprises second data amount information, and the second data amount information indicates a data amount of the second data packet.

21. The method according to claim 18 or 19, wherein the first buffer status report comprises indication information, and the indication information indicates that the first buffer status report indicates the buffer status of the first data packet.

22. The method according to claim 21, wherein the first buffer status report comprises a sub-header field, and the indication information is a logical channel identifier field or an extended logical channel identifier field of the sub-header field.

23. The method according to any one of claims 18 to 22, wherein sending of the first data packet needs to be completed within a first time range.

24. The method according to any one of claims 18 to 23, wherein the method further comprises:
sending configuration information to the terminal device, wherein the configuration information indicates the first time range.

25. A buffer status reporting method, wherein the method comprises:
receiving a buffer status report from a terminal device, wherein the buffer status report indicates a buffer status of at least one data packet, the buffer status report comprises indication information and/or time information, the indication information indicates whether the at least one data packet comprises a first data packet, the time information indicates time within which sending of the at least one data packet needs to be completed, and the first data packet is related to at least one of the following information: service type information, time to expiration information, importance degree information of a protocol data unit set to which the first data packet belongs, or type information of the protocol data unit set to which the first data packet belongs; and
determining a transmission resource of the at least one data packet based on the buffer status report.

26. The method according to claim 25, wherein sending of the first data packet needs to be completed within a first time range.

27. The method according to claim 25 or 26, wherein the method further comprises:
sending configuration information to the terminal device, wherein the configuration information indicates the first time range.

28. The method according to any one of claims 25 to 27, wherein the buffer status report comprises a sub-header field, and the sub-header field comprises the indication information.

29. The method according to claim 28, wherein the indication information is a logical channel identifier field or an extended logical channel identifier field of the sub-header field.

30. A communication apparatus, comprising a module configured to perform the method according to any one of claims 1 to 10, or a module configured to perform the method according to any one of claims 11 to 17.

31. A communication apparatus, comprising a module configured to perform the method according to any one of claims 18 to 24, or a module configured to perform the method according to any one of claims 25 to 29.

32. A computer-readable storage medium, wherein the computer-readable storage medium stores a computer program, and when the computer program is run on a computer, the computer is enabled to perform the method according to any one of claims 1 to 10, the computer is enabled to perform the method according to any one of claims 11 to 17, the computer is enabled to perform the method according to any one of claims 18 to 24, or the computer is enabled to perform the method according to any one of claims 25 to 29.

33. A computer program product, comprising computer program code, wherein when the computer program code is run on a computer, the computer is enabled to implement the method according to any one of claims 1 to 10, the computer is enabled to implement the method according to any one of claims 11 to 17, the computer is enabled to implement the method according to any one of claims 18 to 24, or the computer is enabled to implement the method according to any one of claims 25 to 29.

34. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 10 or the method according to any one of claims 11 to 17, or enable the computer to implement the method according to any one of claims 18 to 24 or the method according to any one of claims 25 to 29.

35. A communication system, comprising the communication apparatus according to claim 30 and the communication apparatus according to claim 31.
